# EUROPÄISCHE PATENTSCHRIFT

(11) **EP 2 078 864 B1**
(45) Veröffentlichungstag und Bekanntmachung des Hinweises auf die Patenterteilung: **24.10.2012**
(21) Anmeldenummer: 08021927.2
(22) Anmeldetag: 17.12.2008
(51) Int. Cl.: F04D 27/02, F04D 29/08, F04D 29/52, F16L 21/035

(54) **Rohrventilator**
Pipe ventilator
Ventilateur à tube

(30) Priorität: 11.01.2008 DE 102008003984
(43) Veröffentlichungstag der Anmeldung: 15.07.2009
(73) Patentinhaber: MAICO Elektroapparate-Fabrik GmbH, 78056 Villingen-Schwenningen (DE)
(72) Erfinder: Obergfell, Elke, 78078 Niedereschach (DE); Hann, Johann, 78056 Villingen-Schwenningen (DE)
(74) Vertreter: Grosse, Rainer

(56) Entgegenhaltungen:
- EP-A1- 0 625 642
- DE-A1- 1 525 971
- DE-A1- 19 718 027
- GB-A- 2 436 353
- US-A- 4 865 517
- US-A- 5 538 406
- US-A1- 2005 214 145

## Beschreibung

Die Erfindung betrifft einen Rohrventilator mit einem aus mehreren Gehäuseteilen bestehenden Gehäuse, wobei die Gehäuseteile in mindestens einer, einen Spaltraum ausbildenden Überlappungszone bereichsweise einander überlappen und rohrförmig ausgebildet sind, jeweils einendig einen Endbereich aufweisen und zwischen ihren Endbereichen die Überlappungszone ausbilden, wobei die Endbereiche zum axialen Zusammenstecken der rohrförmigen Gehäuseteile unterschiedliche Querabmessungen aufweisen.

Derartige Rohrventilatoren sind bekannt. Sie weisen beidseitig einen Rohrleitungsanschluss auf, sodass sie in eine Rohrleitung zur Förderung von Gas, Luft oder dergleichen eingesetzt werden können, um beispielsweise Ent- und Belüftungsaufgaben zu erfüllen. Typische Einsatzmöglichkeiten ergeben sich beispielsweise in Gewerbe- und Industrieanlagen, in Anlagen der Luft-, Klima-, Kälte- und Trockentechnik und bei Arbeitsplatz- oder Maschinenabsaugungen. Für einen einfachen Aufbau besteht das Gehäuse des bekannten Rohrventilators aus mehreren Gehäuseteilen, die miteinander verbunden sind und sich bevorzugt bereichsweise überlappen. Insbesondere ist vorgesehen, dass die Gehäuseteile ineinandergesteckt werden, wobei sich aufgrund des Ineinandersteckens die genannte Überlappung ergibt.

Aus der EP 0 625 642 A1 ist ein Rohrventilator der eingangs genannten Art bekannt, der ein sich aus zwei Gehäuseteilen zusammengesetztes Gehäuse aufweist. Die beiden Gehäuseteile sind durch Zusammenstecken aneinander befestigt. Hierzu weist einer der Gehäuseteilen eine endseitige, umlaufende Gehäusestufe auf, die den Endbereich des anderen Gehäuseteils überlappt. Die Endbereiche verlaufen im Wesentlichen parallel zuelnander.

Aufgabe der Erfindung ist es, einen Rohrventilator der eingangs genannten Art anzugeben, der gegenüber den bisherigen Rohrventilatoren noch vielseitiger einsetzbar und sicherer betreibbar ist.

Diese Aufgabe wird erfindungsgemäß gelöst, dass die Endbereiche oder zumindest Abschnitte davon - im Längsschnitt gesehen - unter einem spitzen Winkel zur Ausbildung des Spaltraums als sich erweiternder Spaltraum zueinander verlaufen, und dass in dem Spaltraum mindestens ein, einen Explosionsschutz des Rohrventilators bewirkendes Dichtungselement angeordnet ist. Durch das in dem Spaltraum angeordnete Dichtungselement werden Leckvolumenströme sicher vermieden, das heißt, der erfindungsgemäße Rohrventilator zeichnet sich durch ein Dichtungssystem der Gehäuseteile aus, sodass er explosionsgeschützt ist und demzufolge in einem entsprechend erweiterten Anwendungsgebiet eingesetzt werden kann. Durch den Explosionsschutz ist ein besonders sicherer Betrieb des erfindungsgemäßen Rohrventilators gewährleistet. Die Gehäuseteile sind rohrförmig ausgebildet. Die beiden Gehäuseteile stellen aufgrund ihrer rohrförmigen Ausgestaltung ein umschlossenes Volumen zur Verfügung, um darin zumindest einen elektrischen Antriebsmotor mit einem vom Antriebsmotor angetriebenen Laufrad aufzunehmen. Es ist vorgesehen, dass die rohrförmigen Gehäuseteile jeweils einendig einen Endbereich aufweisen und zwischen ihren Endbereichen die Überlappungszone ausbilden. Die Endbereiche weisen zum axialen Zusammenstecken der Rohrteile unterschiedliche Querschnittsabmessungen auf. Die Rohrteile können kreisförmige, rechteckige, quadratische, vieleckige Querschnittskonfigurationen aufweisen. Besonders bevorzugt ist es, wenn die Rohrteile als Rundrohrtelle, das heißt mit kreisförmigen Querschnittskonfigurationen, ausgebildet sind. Die Erfindung sieht vor, dass die Endbereiche oder zumindest Abschnitte davon - im Längsschnitt gesehen - unter einem spitzen Winkel zueinander verlaufen. Dies führt dazu, dass ein sich erweiternder Spaltraum ausgebildet wird, der - dreidimensional betrachtet - beispielsweise als im Grundriss dreieckförmiger Ringraum ausgebildet sein kann.

Um ein Zusammenstecken der Endbereiche der Rundrohrteile auf einfache Art und Weise zu bewerkstelligen, sind diese Endbereiche in einer bevorzugten Ausführung mit unterschiedlich großen Durchmessern versehen, sodass sie ineinandersteckbar sind. Hierdurch ergibt sich eine einfache Zentrierung der beiden Teile zueinander und ferner eine einfache Axial- als auch Radialführung.

Eine Weiterbildung der Erfindung sieht vor, dass die Rohrteile als Topfrohrteile ausgebildet sind. Sie werden mit ihren offenen Enden zusammengesteckt und bilden mit ihren jeweiligen Topfböden axiale Abschlusswandungen, die jedoch im zentralen Bereich jeweils nicht geschlossen, sondern mit einem Rohranschlussstutzen versehen sind. Bei dieser Bauform weist die dem Rohrventilator zugeordnete Rohrleitung demzufolge einen geringeren Durchmesser auf als die Durchmesser der Topfrohrteile. Alternativ ist es jedoch auch möglich, dass die Rohrteile nicht topfförmig ausgebildet sind, sondern als Rohrhülsen, deren Durchmesser dem Durchmesser der beidseitig anzuschließenden Rohrleitung entspricht.

Eine dreidimensionale Betrachtung ist stets zu berücksichtigen, wenn im Nachfolgenden auf die verschiedenen Ausbildungen der Endbereiche der Rohrteile eingegangen wird, auch wenn sie in Längsschnittdarstellung beschrieben werden.

Es ist möglich, dass mindestens einer der Endbereiche - im Längsschnitt gesehen - einen winkelförmigen Verlauf aufweist. Hierdurch kann eine Zone ausgebildet werden, in der die Endbereiche der Rohrteile parallel zueinander verlaufen, wobei sich an diese Zone eine weitere Zone anschließt, in der die Endbereiche den erwähnten, dreieckförmigen Spaltraum bilden.

Es kann auch vorgesehen sein, dass mindestens einer der Endbereiche - im Längsschnitt gesehen - einen geraden Verlauf aufweist. Sofern nur einer der Endbereiche einen geraden Verlauf besitzt und der andere Endbereich einen anderen, davon abweichenden Verlauf, so ergibt sich eine entsprechende Überlappungskonstellation.

Bei allen vorstehend erwähnten Ausführungsvarianten im Hinblick auf die Endbereichsausbildung ist stets vorgesehen, dass sich in der Überlappungszone das Dichtungselement befindet, das von den Endbereichen entsprechend eingeklemmt, also druckbeaufschlagt wird, sodass sich eine einwandfreie Dichtfunktion einstellt. Wird der erwähnte dreieckförmige Spaltraum ausgebildet, so wird das Dichtungselement in einer durch die Dreiecksform engeren Zone stärker komprimiert als in einer angrenzenden, erweiterten Zone, mit der Folge, dass nur relativ kleinflächige Abschnitte der Endbereiche das Dichtungselement stark beaufschlagen, während andere, daran angrenzende Abschnitte der Endbereiche weniger starke Kompressionskräfte aufbringen. Hierdurch wird die Dichtungseigenschaft des Dichtungselements optimiert.

Ferner ist es vorteilhaft, wenn das Dichtungselement - im genannten Längsschnitt gesehen - einen quadratischen, rechteckigen, kreisförmigen, ovalen und/oder D-förmigen Grundriss aufweist. Es kann insbesondere auch vorgesehen sein, dass mindestens eine Grundrissbegrenzungsseite des Dichtungselements rippenartig ausgebildet ist. Hier kann eine oder es können mehrere Rippen vorgesehen sein, die vorzugsweise einstückig mit dem Dichtungselement ausgebildet sind und eine Einfach- oder Mehrfachabdichtung schaffen.

Nach einer Weiterbildung der Erfindung ist vorgesehen, dass das Dichtungselement als Vollmaterialelement oder Hohlmaterialelement ausgebildet ist. Es besteht vorzugsweise aus elastischem Material.

Es ist vorzugsweise vorgesehen, dass das Dichtungselement mindestens eine Dichtlippe aufweist. Diese Dichtlippe kann einendig an einen Grundkörper des Dichtungselements vorzugsweise einstückig angebunden sein und weist anderendig eine freie Endkante auf.

Alternativ oder zusätzlich zu dem vorstehend erwähnten, separat ausgebildeten Dichtungselement kann vorgesehen sein, dass das Dichtungselement erst bei der Herstellung des Rohrventilators dadurch erzeugt wird, dass Dichtmasse in den Spaltraum eingebracht, insbesondere eingespritzt, wird. Dies hat den Vorteil, dass die Dichtmasse sich den geometrischen Gegebenheiten des Spaltraums anpasst und dort in dieser Konturierung abbindet.

Die Zeichnungen veranschaulichen die Erfindung anhand von Ausführungsbeispielen, und zwar zeigt:
- Figur 1: eine perspektivische Ansicht eines Rohrventilators,
- Figur 2: einen Längsschnitt durch eine Hälfte des Rohrventilators der Figur 1,
- Figuren 3 bis 16: verschiedene erfindungsgemäße und nicht erfindungsgemäße Ausführungsformen einer Überlappungs- und/oder Fluchtungszone von sich überlappenden oder fluchtenden Gehäuseteilen eines Gehäuses des Rohrventilators.

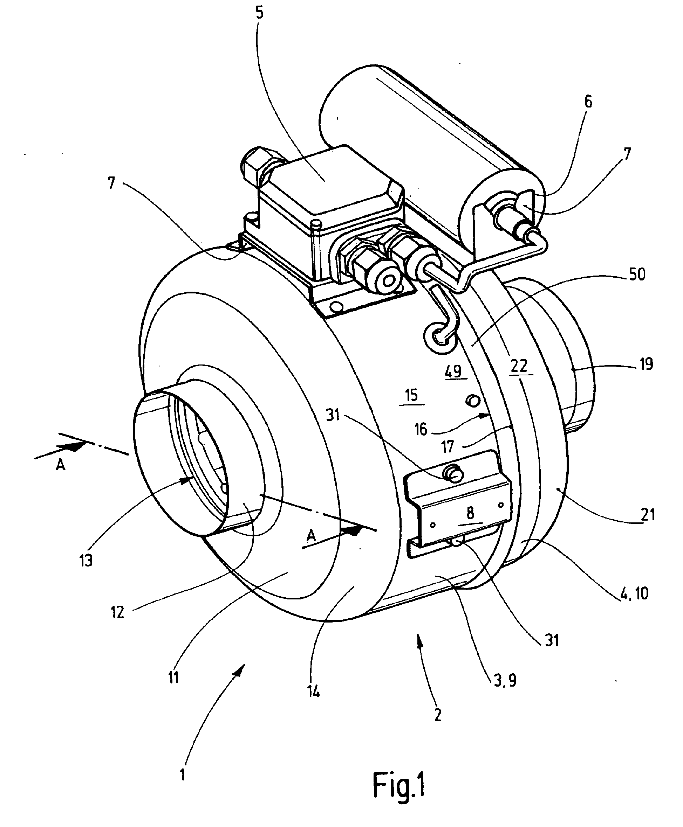

Die Figur 1 zeigt einen Rohrventilator 1 zur Förderung von gasförmigen Medien, der ein Gehäuse 2 aufweist, das aus einem ersten Gehäuseteil 3 und einem zweiten Gehäuseteil 4 besteht. Auf dem Gehäuse 2 ist für den elektrischen Anschluss des Rohrventilators 1 eine Verteilerdose 5 und ein Kondensator 6 mittels am Gehäuse 2 angeordneter Befestigungsvorrichtungen 7 angebracht. Die Verteilerdose 5 und der Kondensator 6 können explosionsgeschützt ausgebildet sein. Ferner sind am Gehäuse 2 zwei, einander gegenüberliegende Haltevorrichtungen 8 angeordnet, die einer Befestigung des Rohrventilators 1 dienen. Die Figur 1 zeigt aufgrund der Darstellungsweise nur eine der beiden Haltevorrichtungen 8.

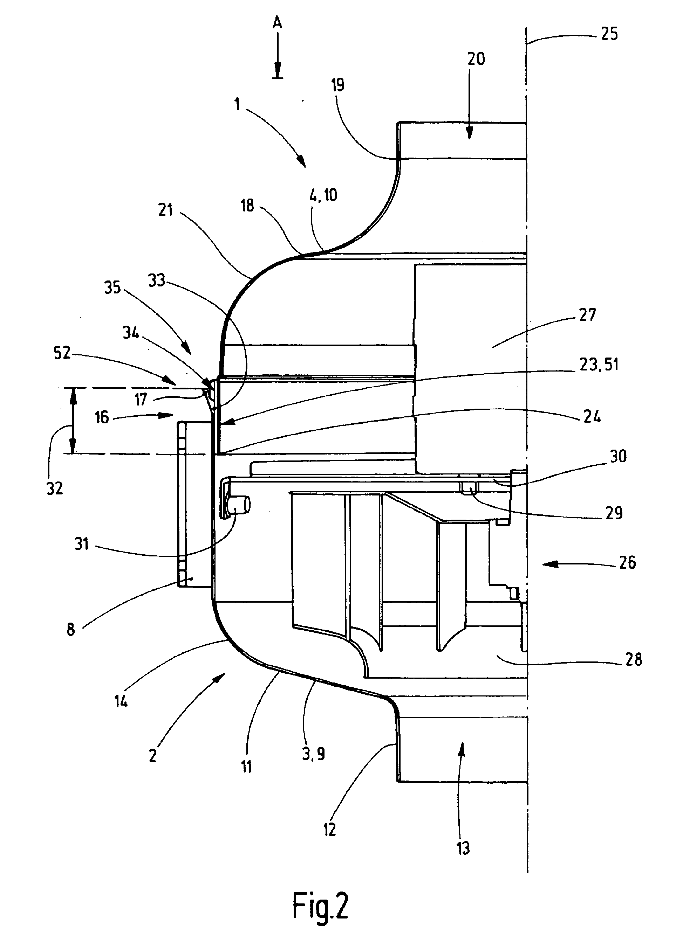

Die Figur 2 zeigt eine Rohrventilatorhälfte des Rohrventilators 1 im Längsschnitt, das heißt der Rohrventilator 1 ist nur hälftig zu seiner Längsachse 25 entlang einer Schnittebene A-A (Figur 1) dargestellt.

Die Gehäuseteile 3 und 4 sind als Topfrohrteile 9 und 10 ausgebildet. Als Werkstoffe für die Gehäuseteile 3 und 4 kommen Metall und/oder Kunststoff in Frage. Das Topfrohrteil 9 ist einseitig durch einen Topfboden 11 begrenzt, der in seinem zentralen Bereich einen Rohranschlussstutzen 12 aufweist. Der Rohranschlussstutzen 12 begrenzt eine Öffnung 13 im Topfboden 11, die dem Ein- und/oder Auslass der geförderten Medien dient. Der Topfboden 11 geht umfänglich mit einem, vom Rohranschlussstutzen 12 wegführenden Radius 14 in einen Topfmantel 15 über. Die dem Topfboden 11 abgewandten Seite des Topfmantels 15 weist einen ringförmigen Endbereich 16 auf, der mit einer Kante 17 abschließt. Das Topfrohrteil 10 ähnelt dem Topfrohrteil 9 in seiner Grundform. Es besitzt einen Topfboden 18, einen Rohranschlussstutzen 19 und eine durch den Rohranschlussstutzen 19 begrenzte Öffnung 20 im Topfboden 18. Der Topfboden 18 geht mit einem Radius 21 in einen Topfmantel 22 über, der einen ringförmigen Endbereich 23 aufweist, welcher mit einer Kante 24 abschließt. Trotz der genannten Ähnlichkeiten unterscheiden sich die Topfrohrteile 9 und 10 insbesondere in ihren Endbereichen 16 und 23 durch unterschiedliche Abmessungen und Ausformungen.

Die Ausformung des Endbereichs 16 setzt sich zusammen aus einem Kreis-Zylindermantel 49, an dem sich ein Kreis-Kegelstumpfmantel 50 anschließt, dessen Kreisquerschnittsabmessung sich vom Kreis-Zylindermantel 49 ausgehend bis zu der Kante 17 vergrößert. Der Endbereich 23 ist gemäß Figur 2 dagegen nur als Kreis-Zylindermantel 51 ausgeführt, dessen Kreisquerschnittsabmessung kleiner ist als die des Kreiszylindermantels 49 des Endbereichs 16. Die unterschiedlichen Kreisquerschnittsabmessungen sind notwendig, da die beiden Endbereiche 16 und 23, wie in Figur 1 und 2 ersichtlich, derart axial zusammengesteckt sind, dass der Endbereich 23 zumindest ein Stück weit vom Endbereich 16 aufgenommen ist.

Die beiden Topfrohrteile 9 und 10 umschließen einen Raum 26, welcher einen elektrischen Antriebsmotor 27 und ein Ventilatorlaufrad 28 aufnimmt. Das Ventilatorlaufrad 28 ist mit dem elektrischen Antriebsmotor 27 wirkverbunden, der durch Schrauben 29 an einer Querstrebe 30 befestigt ist. Die Querstrebe 30 ist ihrerseits über Schrauben 31 mit dem Topfrohrteil 9 und den Haltevorrichtungen 8 verbunden.

Das Topfrohrteil 9 nimmt, wie bereits erwähnt, in seinem Endbereich 16 den Endbereich 23 auf, wodurch eine Überlappungszone 32 entsteht. Die beiden Endbereiche 16 und 23 bilden in der Überlappungszone 32 wegen des Kreis-Kegelstumpfmantels 50 einen bereichsweise keilförmigen Spaltraum 33 aus. In dem Spaltraum 33 ist ein Dichtungselement 34, den Spaltraum 33 axial und radial abdichtend, angeordnet. Das Dichtungselement 34 ist elastisch ausgebildet und wird im Spaltraum 33 eingeklemmt. Insgesamt wird somit ein Dichtungssystem 35 ausgebildet, das Leckvolumenströme aus dem Raum 26 des Gehäuses 2 verhindert und auf diese Art und Weise einen Explosionsschutz 52 bildet.

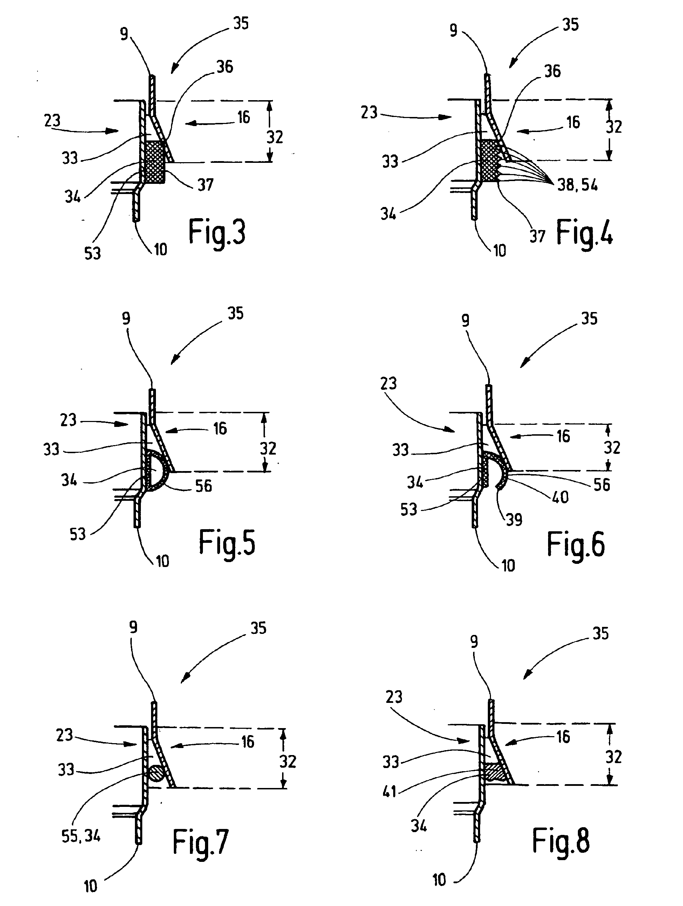

Die Figuren 3 bis 15 zeigen bei unterschiedlichen erfindungsgemäßen und nicht erfindungsgemäßen Ausführungsbeispielen jeweils einen Ausschnitt (entsprechend der Figur 2) im Bereich der Überlappungszone 32. Die unterschiedlichen Ausführungen des jeweils gebildeten Dichtungssystems 35 sind aus einer Paarung gleich- oder verschiedenartig ausgeführter Endbereiche 16 und 23 und mindestens einem Dichtungselement 34 gebildet. Aus Verständnisgründen ist das Dichtungselement 34 in den Figuren 3 bis 7 und 9 bis 15 in einem unverformten Zustand dargestellt und nicht in dem Zustand, den es durch das Einklemmen zwischen den Endbereichen 16 und 23 eigentlich hat. Der Einbauzustand des Dichtungselements 34 im Spaltraum 33 ist bei den Ausführungsbeispielen der Figuren 3 bis 7 und 9 bis 16 als Verpressung ausgelegt. Das vorzugsweise aus Gummi oder Kunststoff bestehende Dichtungselement 34, das aus Vollmaterial und/oder aus geschäumtem Material bestehen kann, weist eine Elastizität auf, weshalb aus der Verpressung eine Verformung des Dichtungselements 34 im Spaltraum 33 resultiert, die eine Abdichtung des Spaltraums 33 bewirkt. Es ist weiterhin zu berücksichtigen, dass es sich bei den Darstellungen der Figuren 3 bis 15 um Längsschnitte handelt, weshalb die in den Figuren 3 bis 15 gezeigten Ausführungen des Dichtungssystems 35 zweidimensional dargestellt und auch derart beschrieben sind. Die tatsächlich vorliegende dreidimensionale Form des Dichtungssystems 35 ergibt sich, wenn die zweidimensionale Darstellung um die Längsachse 25 rotiert wird.

Figur 3 zeigt eine erfindungsgemäße Ausführung des Dichtungssystems 35, bei der das Topfrohrteil 9 eine größere Querschnittsabmessung im Endbereich 16 aufweist als das Topfrohrteil 10 im Endbereich 23. Die Ausführung des Endbereichs 16 in der Überlappungszone 32 ist winkelförmig; die Ausführung des Endbereichs 23 verläuft gerade. Gemeinsam bilden die Endbereiche 16 und 23 einen bereichsweise keilförmigen Spaltraum 33, welcher durch ein, im Grundriss rechteckförmiges Dichtungselement 34 abgedichtet ist. Das rechteckförmige Dichtungselement 34 liegt mit einer Grundrissbegrenzungsseite 53 gegen den Endbereich 23 an. Dadurch bildet das Dichtungselement 34 - dreidimensional gesehen - eine Ringstruktur um den Endbereich 23 des Topfrohrteils 10 aus. Im keilförmigen Bereich des Spaltraums 33 liegt nur eine dem Endbereich 16 zugewandte Ecke 36 einer der Grundrissbegrenzungsseite 53 gegenüberliegenden Grundrissbegrenzungsseite 37 unter Vorspannung am Endbereich 16 an.

Die erfindungsgemäße Ausführung des Dichtungssystems 35 in Figur 4 unterscheidet sich von der in Figur 3 in der Ausbildung des verwendeten Dichtungselements 34, alle weiteren Merkmale gleichen denen in Figur 3. Die Grundrissbegrenzungsseite 37 weist axial aufeinanderfolgend angeordnete Rippen 38 auf. Die Rippen 38 bilden - dreidimensional gesehen - um den Rohrventilator 1 koaxiale, axial hintereinander geschaltete Rippenringe 54. Sie dichten gegen den Teil des Endbereichs 16, der den keilförmigen Spaltraum 33 ausbildet, wobei die Rippenringe 54 aufgrund ihrer Form wie mehrere, hintereinander geschaltete Dichtungen wirken und somit besonders wirksam den Spaltraum 33 axial und radial und damit das Innere des Rohrventilators 1 abdichten.

Die erfindungsgemäße Ausführung des Dichtungssystems 35 in Figur 5 unterscheidet sich von der in Figur 3 in dem Grundriss des verwendeten Dichtungselements 34, alle weiteren Merkmale gleichen denen in Figur 3. Das Dichtungselement 34 besitzt einen hohlen, D-förmigen Grundriss, mit einer geraden Grundrissbegrenzungsseite 53 und einer gewölbten Grundrissbegrenzungsseite 56. Die gerade Grundrissbegrenzungsseite 53 liegt an dem Endbereich 23 an. Die gewölbte Grundrissbegrenzungsseite 56 ist im keilförmigen Spaltraum 33 tangential gegen den Endbereich 16 gedrückt, um den Spaltraum 33 abzudichten.

Die erfindungsgemäße Ausführung des Dichtungssystems 35 In Figur 6 unterscheidet sich von der in Figur 5 in dem Grundriss des verwendeten Dichtungselements 34, alle weiteren Merkmale gleichen denen in Figur 5. Das Dichtungselement 34 hat, wie in der Figur 5, einen hohlen, D-förmigen Grundriss, mit einer geraden Grundrissbegrenzungsseite 53 und einer gewölbten Grundrissbegrenzungsseite 56. Es unterscheidet sich jedoch von dem Dichtungselement 34 aus Figur 5 dadurch, dass die dem Spaltraum 33 abgewandte Ecke der D-Form nicht vorhanden ist und damit die gewölbte Grundrissbegrenzungsseite 56 zu einer Dichtlippe 40 mit einer freien Endkante 39 ausgebildet ist. Die Platzierung und Wirkungsweise des Dichtungselements 34 in der Figur 6 gleicht wiederum der Platzierung und Wirkungsweise des Dichtungselements 34 in Figur 5.

Die erfindungsgemäße Ausführung des Dichtungssystems 35 in Figur 7 unterscheidet sich von der in Figur 3 in dem Grundriss des verwendeten Dichtungselements 34, alle weiteren Merkmale gleichen denen in Figur 3. Das Dichtungselement 34 besitzt einen kreisförmigen Grundriss, bildet somit - dreidimensional gesehen - einen O-Ring 55, und ist in dem keilförmigen Teil des Spaltraums 33 eingeklemmt, um den Spaltraum 33 und damit das Innere des Rohrventilators 1 abzudichten.

Die erfindungsgemäße Ausführung des Dichtungssystems 35 in Figur 8 unterscheidet sich von der in Figur 3 in dem verwendeten Dichtungselement 34, alle weiteren Merkmale gleichen denen in Figur 3. Es handelt sich hierbei um eine in den Spaltraum 33 zum Beispiel durch Einspritzen eingebrachte Dichtmasse 41, wie zum Beispiel Silikon, die den Spaltraum 33 abdichtet, indem sie nach Abbinden elastisch bleibt. Dadurch ist eine spannungsfreie Abdichtung des Spaltraums 33 ermöglicht.

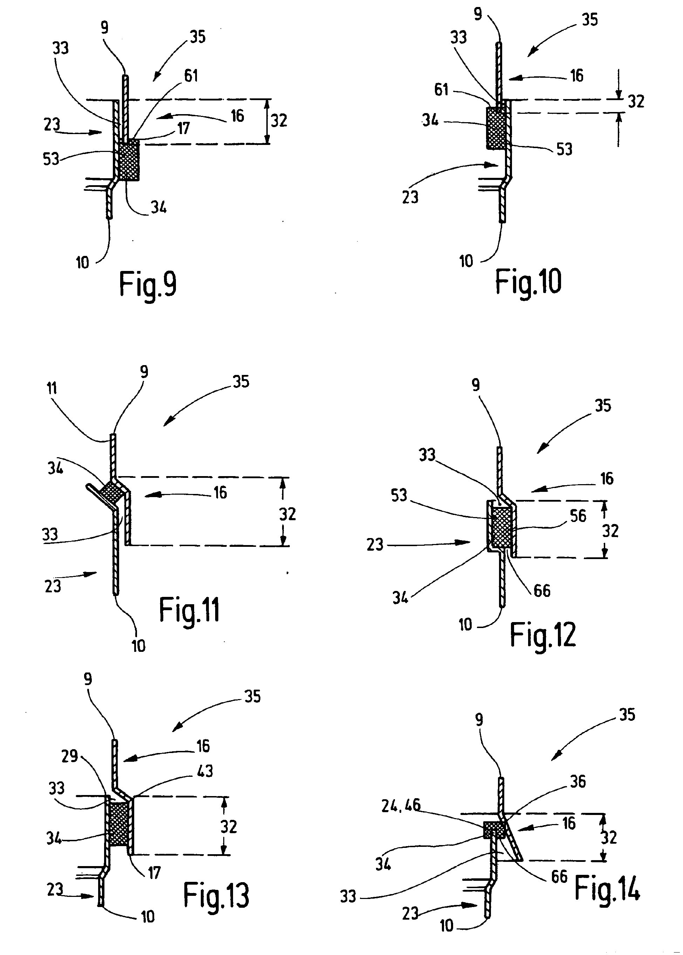

Figur 9 zeigt eine nicht erfindungsgemäße Ausführung des Dichtungssystems 35, bei der die Ausführungen der Endbereiche 16 und 23 in der Überlappungszone 32 beide gerade und zur Längsachse 25 parallel verlaufen. Gemeinsam bilden die Endbereiche 16 und 23 einen rechteckförmigen Spaltraum 33. Der Endbereich 16 übergreift den Endbereich 23. Zur Abdichtung des Spaltraums 33 wird ein im Grundriss insbesondere rechteckförmiges Dichtungselement 34 verwendet, das mit einer Grundrissbegrenzungsseite 53 an der - radial gesehenen - Außenseite des Endbereichs 23 angebracht ist. Die Ausführung des Dichtungssystems 35 in der Figur 9 sieht vorzugsweise vor, dass das Dichtungselement 34 derart mit dem Endbereich 23 des Topfrohrteils 10 verbunden wird, dass es bei Aufbringung von axial wirkenden Kräften nicht verrutschen kann. Dies kann beispielsweise durch ein Verkleben und/oder Verschweißen geschehen. Eine weitere Möglichkeit ist eine Auslegung des - dreidimensional gesehen - ringförmigen Dichtungselements 34, derart, dass sich das Dichtungselement 34 beim Aufbringen auf den Endbereich 23 durch Eigenelastizität klemmend und/oder durch Klebung hält und damit fixiert. Der Endbereich 16 schließt mit der Kante 17 ab, die in eine Grundrissbegrenzungsseite 61 des Dichtungselements 34 eingedrückt ist, um den Spaltraum 33 abzudichten.

Die nicht erfindungsgemäße Ausführung des Dichtungssystems 35 in Figur 10 unterscheidet sich von der in Figur 9 nur dadurch, dass die Querschnittsabmessung des Topfrohrteils 9 im Endbereich 16 kleiner ist, als die Querschnittsabmessung des Topfrohrteils 10 im Endbereich 23. Dadurch wird der Endbereich 16 ein Stück weit von dem Endbereich 23 aufgenommen. Deshalb ist das Dichtungselement 34, radial gesehen, auf der Innenseite des Endbereichs 23 angebracht. Alle weiteren Merkmale gleichen denen in Figur 9.

Figur 11 zeigt eine nicht erfindungsgemäße Ausführung des Dichtungssystems 35, bei der der Endbereich 23 vom Endbereich 16 ein Stück weit aufgenommen wird. Die Ausführung des Endbereichs 16 in der Überlappungszone 32 verläuft zunächst axial gerade, ist dann gekröpft und schließt mit einem geraden Verlauf ab, so dass sich der Endbereich 16 in seiner Querschnittsabmessung erweitert. Die Ausführung des Endbereichs 23 ist winkelförmig und verläuft auf die Längsachse 25 (Figur 2) zu, sodass sich die Querschnittsabmessung des Endbereichs 23 verkleinert. Daraus ergibt sich ein Bereich des Spaltraums 33, in dem der gekröpfte Teil des Endbereichs 16 und der abgewinkelte Teil des Endbereichs 23 parallel oder etwa parallel zueinander verlaufen. In diesem Bereich ist der Spaltraum 33 durch ein im Grundriss quadratisches Dichtungselement 34 abgedichtet.

Die nicht erfindungsgemäße Ausführung des Dichtungssystems 35 in Figur 12 gleicht der in Figur 11 nur in der Ausführung des Endbereichs 16 in der Überlappungszone 32. Die Ausführung des Endbereichs 23 verläuft axial zunächst gerade, ist in der Überlappungszone 32 rechtwinklig abgekröpft und verläuft abschließend wieder gerade. Der Spaltraum 33 wird durch ein im Grundriss rechteckförmiges Dichtungselement 34 abgedichtet, das aufgrund der speziellen Ausformung des Endbereichs 23 so an dem Endbereich 23 liegt, dass zum Einen eine Grundrissbegrenzungsseite 53 gegen den Endbereich 23 liegt und zum Anderen eine Grundrissbegrenzungsseite 66 an dem rechtwinklig gekröpften radialen Teil des Endbereichs 23 anliegt. Diese spezielle Ausführung des Dichtungssystems 35 verhindert ein Verrutschen des Dichtungselements 34 in Richtung des Topfrohrteils 10 und ermöglicht so eine feste Position des Dichtungselements 34, zum Beispiel beim Zusammenbau des Gehäuses 2. Um den Spaltraum 33 abzudichten, ist eine Grundrissbegrenzungsseite 56 des Dichtungselements 34 gegen das axial gerade verlaufende Endstück des Endbereichs 16 gedrückt.

Die nicht erfindungsgemäße Ausführung des Dichtungssystems 35 in Figur 13 unterscheidet sich von der in Figur 12 dadurch, dass der Endbereich 23 axial gerade verläuft. Alle weiteren Merkmale gleichen denen in Figur 12.

Die erfindungsgemäße Ausführung des Dichtungssystems 35 in Figur 14 unterscheidet sich von der in Figur 3 dadurch, dass ein rechteckförmiges, mit einem in eine Grundrissbegrenzungsseite 66 eingebrachten Schlitz 46 versehenes Dichtungselement 34 verwendet wird. Die Kante 24 des Endbereichs 23 wird in dem Schlitz 46 aufgenommen. Alle weiteren Merkmale gleichen denen in Figur 3.

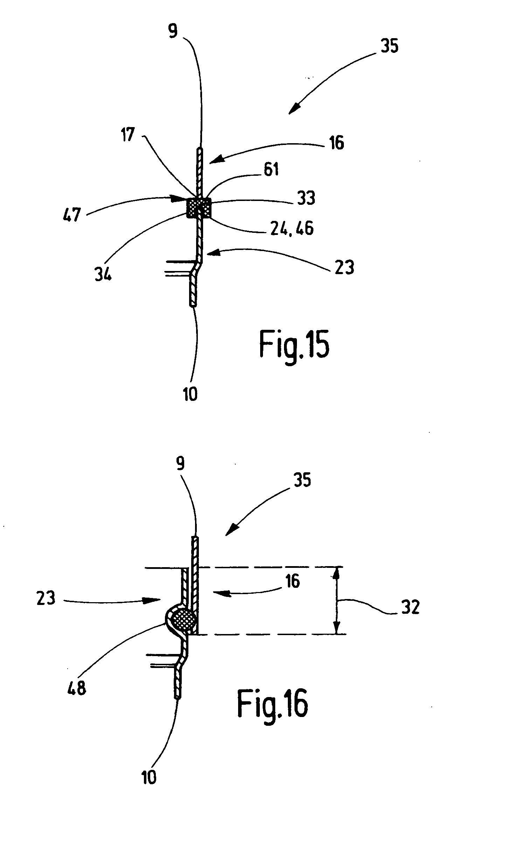

Figur 15 zeigt eine nicht erfindungsgemäße Ausführung des Dichtungssystems 35, bei der das Topfrohrteil 9 die gleiche Querschnittsabmessung im Endbereich 16 aufweist wie das Topfrohrteil 10 im Endbereich 23. Die Ausführungen der Endbereiche 16 und 23 verlaufen beide axial gerade, wodurch die sich gegenüberliegenden Kanten 17 und 24 eine Fluchtungszone 47 bilden. Der in der Fluchtungszone 47 liegende Spaltraum 33 wird durch ein vorzugsweise rechteckförmiges Dichtungselement 34 abgedichtet, das einseitig einen Schlitz 46 aufweist, der die Kante 24 aufnimmt. In die dem Schlitz 46 gegenüberliegende Grundrissbegrenzungsseite 61 des Dichtungselements 34 ist die Kante 17 eingedrückt, um den Spaltraum 33 abzudichten.

Figur 16 zeigt eine nicht erfindungsgemäße Ausführung des Dichtungssystems 35, bei der der Endbereich 16 den Endbereich 23 in sich aufnimmt. Die Ausführung des Endbereichs 16 in der Überlappungszone 32 verläuft axial gerade, während die Ausführung des Endbereichs 23 einen rinnenförmigen Verlauf 48 aufweist, der radial zur Längsachse 25 verläuft (Figur 2). Der rinnenförmige Verlauf 48 dient zur Aufnahme eines Dichtungselements 34 mit vorzugsweise kreisförmigem Grundriss, welches radial gegen den Endbereich 16 gedrückt ist. Der rinnenförmige Verlauf 48 verhindert ein Verrutschen und/oder Verrollen des Dichtungselements 34 auf dem Topfrohrteil 10.

## Patentansprüche

1. Rohrventilator (1) mit einem aus mehreren Gehäuseteilen (3,4) bestehenden Gehäuse (2), wobei die Gehäusetelle (3,4) in mindestens einer, einen Spaltraum (33) ausbildenden Überlappungszone (32) bereichsweise einander überlappen und rohrförmig ausgebildet sind, jeweils einendig einen Endbereich (16,23) aufweisen und zwischen ihren Endbereichen (16,23) die Überlappungszone (32) ausbilden, wobei die Endbereiche (16,23) zum axialen Zusammenstecken der rohrförmigen Gehäuseteile (3,4) unterschiedliche Querabmessungen aufweisen, **dadurch gekennzeichnet, dass** die Endbereiche (16,23) oder zumindest Abschnitte davon - im Längsschnitt gesehen - unter einem spitzen Winkel zur Ausbildung des Spaltraums (33) als sich erweiternder Spaltraum (33) zueinander verlaufen, und dass in dem Spaltraum (33) mindestens ein, einen Explosionsschutz (52) des Rohrventilators (1) bewirkendes Dichtungselement (34) angeordnet ist

2. Rohrventilator nach Anspruch 1, **dadurch gekennzeichnet, dass** die rohrförmigen Gehäuseteile (3,4) als Rundrohrteile ausgebildet sind.

3. Rohrventilator nach Anspruch **2, dadurch gekennzeichnet, dass** die Endbereiche der Rundrohrteile unterschiedlich große Durchmesser aufweisen.

4. Rohrventilator nach einem der vorhergehenden Ansprüche, **dadurch gekennzeichnet, dass** die rohrförmigen Gehäuseteile (3,4) als Topfrohrteile (9,10) ausgebildet sind.

5. Rohrventilator nach einem der vorhergehenden Ansprüche, **dadurch gekennzeichnet, dass** mindestens einer der Endbereiche (16,23) - im Längsschnitt gesehen - einen winkelförmigen Verlauf aufweist.

6. Rohrventilator nach einem der vorhergehenden Ansprüche, **dadurch gekennzeichnet, dass** mindestens einer der Endbereiche (16,23) - im Längsschnitt gesehen - einen geraden Verlauf aufweist.

7. Rohrventilator nach einem der vorhergehenden Ansprüche, **dadurch gekennzeichnet, dass** das Dichtungselement (34) - im genannten Längsschnitt gesehen - einen quadratischen, rechteckigen, kreisförmigen, ovalen und/oder D-förmigen Grundriss ausweist.

8. Rohrventilator nach einem der vorhergehenden Ansprüche, **dadurch gekennzeichnet, dass** mindestens eine Grundrissbegrenzungsseite (37) des Dichtungselements (34) rippenartig ausgebildet ist.

9. Rohrventilator nach einem der vorhergehenden Ansprüche, **dadurch gekennzeichnet, dass** das Dichtungselement (34) als Vollmaterialelement oder als Hohlmaterialelement ausgebildet ist.

10. Rohrventilator nach einem der vorhergehenden Ansprüche, **dadurch gekennzeichnet, dass** das Dichtungselement (34) mindestens eine Dichtlippe (40) aufweist.

11. Rohrventilator nach Anspruch 10, **dadurch gekennzeichnet dass** die Dichtlippe (40) eine freie Endkante (39) aufweist.

12. Rohrventilator nach einem der vorhergehenden Ansprüche, **dadurch gekennzeichnet, dass** das Dichtungselement (34) aus elastischem Material besteht.

13. Rohrventilator nach einem der vorhergehenden Ansprüche, **dadurch gekennzeichnet, dass** das Dichtungselement (34) aus Dichtmasse (41) gebildet ist.

## Claims

1. A duct fan (1) comprising a housing (2), which consists of a plurality of housing pieces (3, 4), wherein the housing pieces (3, 4) are embodied so as to overlap one another area by area and so as to be pipe-shaped in at least one overlapping zone (32), which embodies a gap (33), in each case encompass an end area (16, 23) on one end and embody the overlapping zone (32) between their end areas (16, 23), wherein the end areas (16, 23) encompass different lateral dimensions for axially interlocking the pipe-shaped housing pieces (3, 4), **characterized in that** the end areas (16, 23) or at least sections thereof-viewed in longitudinal section - run at an acute angle to one another to embody the gap (33) as a gap (33), which widens, and **in that** at least one sealing element (34), which effects an explosion protection (52) for the duct blower (1), is arranged in the gap (33).

2. The duct fan according to claim 1, **characterized in that** the pipe-shaped housing pieces (3, 4) are embodied as round pipe pieces.

3. The duct fan according to claim 2, **characterized in that** the end areas of the round pipe pieces encompass diameters of different sizes.

4. The duct fan according to any one of the preceding claims, **characterized in that** the pipe-shaped housing pieces (3, 4) are embodied as cup pipe pieces (9, 10).

5. The duct fan according to any one of the preceding claims, **characterized in that** at least one of the end areas (16, 23) - viewed in longitudinal section - encompasses an angled course.

6. The duct fan according to any one of the preceding claims, **characterized in that** at least one of the end areas (16, 23) - viewed in longitudinal section - encompasses a straight course.

7. The duct fan according to any one of the preceding claims, **characterized in that** the sealing element (34) - viewed in the mentioned longitudinal section - encompasses a square, rectangular, circular, oval and/or D-shaped plan view.

8. The duct fan according to any one of the preceding claims, **characterized in that** at least one plan view limiting side (37) of the sealing element (34) is embodied in a rib-like manner.

9. The duct fan according to any one of the preceding claims, **characterized in that** the sealing element (34) is embodied as a solid material element or as a hollow material element.

10. The duct fan according to any one of the preceding claims, **characterized in that** the sealing element (34) encompasses at least one sealing lip (40).

11. The duct fan according to claim 10, **characterized in that** the sealing lip (40) encompasses a free trailing edge (39).

12. The duct fan according to any one of the preceding claims, **characterized in that** the sealing element (34) consists of elastic material.

13. The duct fan according to any one of the preceding claims, **characterized in that** the sealing element (34) is formed from sealing compound (41).

## Revendications

1. Ventilateur tubulaire (1) comprenant un logement (2) constitué de plusieurs parties de logement (3, 4), dans lequel les parties de logement (3, 4) se chevauchent mutuellement par région dans au moins une zone de chevauchement (32) formant un espace de fente (33) et sont réalisées de manière tubulaire, présentent à chaque fois une région d'extrémité (16, 23) à une extrémité et forment la zone de chevauchement (32) entre leurs régions d'extrémité (16, 23), dans lequel les régions d'extrémité (16, 23) présentent différentes dimensions transversales pour l'emboîtement axial des parties de logement tubulaires (3, 4), **caractérisé en ce que** les régions d'extrémité (16, 23), ou du moins des sections de celles-ci, vues en coupe longitudinale, s'étendent à un angle aigu l'une par rapport à l'autre en vue de réaliser l'espace de fente (33) en tant qu'espace de fente s'élargissant (33), et qu'au moins un élément d'étanchéité (34) entraînant une protection contre l'explosion (52) du ventilateur tubulaire (1) est disposé dans l'espace de fente (33).

2. Ventilateur tubulaire selon la revendication 1, **caractérisé en ce que** les parties de logement tubulaires (3, 4) sont réalisées en tant que parties tubulaires rondes.

3. Ventilateur tubulaire selon la revendication 2, **caractérisé en ce que** les régions d'extrémité des parties tubulaires rondes présentent des diamètres de taille différente.

4. Ventilateur tubulaire selon l'une quelconque des revendications précédentes, **caractérisé en ce que** les parties de logement tubulaires (3, 4) sont réalisées en tant que parties tubulaires creuses (9, 10).

5. Ventilateur tubulaire selon l'une quelconque des revendications précédentes, **caractérisé en ce qu'**au moins une des régions d'extrémité (16, 23) présente une allure angulaire, vue en coupe longitudinale.

6. Ventilateur tubulaire selon l'une quelconque des revendications précédentes, **caractérisé en ce qu'**au moins une des régions d'extrémité (16, 23) présente une allure droite, vue en coupe longitudinale.

7. Ventilateur tubulaire selon l'une quelconque des revendications précédentes, **caractérisé en ce que** l'élément d'étanchéité (34) présente un contour carré, rectangulaire, circulaire, ovale et/ou en forme de D, vu en coupe longitudinale.

8. Ventilateur tubulaire selon l'une quelconque des revendications précédentes, **caractérisé en ce qu'**au moins un côté de limitation de contour (37) de l'élément d'étanchéité (34) est réalisé à la manière d'une nervure.

9. Ventilateur tubulaire selon l'une quelconque des revendications précédentes, **caractérisé en ce que** l'élément d'étanchéité (34) est réalisé en tant qu'élément de matériau plein ou en tant qu'élément de matériau creux.

10. Ventilateur tubulaire selon l'une quelconque des revendications précédentes, **caractérisé en ce que** l'élément d'étanchéité (34) présente au moins une lèvre d'étanchéité (40).

11. Ventilateur tubulaire selon la revendication 10, **caractérisé en ce que** la lèvre d'étanchéité (40) présente une arête d'extrémité libre (39).

12. Ventilateur tubulaire selon l'une quelconque des revendications précédentes, **caractérisé en ce que** l'élément d'étanchéité (34) se compose de matériau élastique.

13. Ventilateur tubulaire selon l'une quelconque des revendications précédentes, **caractérisé en ce que** l'élément d'étanchéité (34) est formé d'une masse d'étanchéité (41).
